# EUROPEAN PATENT SPECIFICATION

(11) **EP 2 979 811 B1**
(45) Date of publication and mention of the grant of the patent: **19.12.2018**
(21) Application number: 15178635.7
(22) Date of filing: 28.07.2015
(51) Int. Cl.: B23Q 1/54, B23Q 39/02

(54) **MULTI-SPINDLE WORKING HEAD AND MACHINE TOOL USING SAID HEAD**
MEHRSPINDLIGER ARBEITSKOPF UND WERKZEUGMASCHINE MIT DEM KOPF
TÊTE DE TRAVAIL MULTIBROCHE ET MACHINE-OUTIL UTILISANT LADITE TÊTE

(30) Priority: 28.07.2014 IT FI20140177
(43) Date of publication of application: 03.02.2016
(73) Proprietor: Paolino Bacci S.r.l., 56021 Cascina, (PI) (IT)
(72) Inventor: BACCI, Giuseppe, 56025 Pontedera (Pi) (IT); BACCI, Paolo, 56025 Pontedera (Pi) (IT); BACCI, Nino, 56025 Pontedera (Pi) (IT)
(74) Representative: Mannucci, Michele

(56) References cited:
- EP-A1- 2 123 392
- DE-A1- 3 831 613

## Description

### Technical Field

The present invention relates to the field of machine tools and machining centres for chip-removal processing. In particular, although not exclusively, the invention relates to the field of machine tools and machining centres for machining wood.

### State of the Art

To process workpieces requiring numerous operations, machining centres or machine tools are known having a plurality of spindles to actuate a plurality of tools, for instance cutters, drills and the like.

EP 2500133 discloses a multi-spindle working head with two independent spindle groups usable to perform, by means of respective tools, a plurality of machining operations on a workpiece, for instance a beam-shaped or a panel-shaped workpiece or the like. This working head offers high flexibility and allows performing complex machining cycles, requiring the use of different tools in sequence without removing the workpiece. The workpiece can be put and held on the machine, and it is possible to perform a plurality of machining operations thereon by means of the tools, the machine is provided with.

This known machine tool is efficient and able to perform several machining operations in sequence on the same workpiece without moving the latter, but it can be improved to have more machining capabilities and smaller dimensions.

Machine tools with multiple spindles are disclosed in EP2123392 and DE 3831613.

### Summary of the Invention

To achieve greater efficiency, a multi-spindle working head according to claim 1 is provided. The head comprises:
a support rotating around a first numerically controlled rotary axis;
on a first side of the support, a first spindle group rotating around a second numerically controlled rotary axis and comprising at least two spindles;
on a second side of the support, a second spindle group rotating around a third numerically controlled rotary axis;
wherein the first rotary axis is in an intermediate position between the first side and the second side of the support; and wherein the first spindle group and the second spindle group are spaced from each other by means of the support interposed therebetween, the support forming a spacer between a first pivoting joint, joining the first spindle group to the support, and a second pivoting joint, joining the second spindle group to the support.

The arrangement allows to have a high number of spindles in a limited space and to reduce the bulk and the stroke of the working head. In some embodiments, it is possible to machine a workpiece arranged between two spindle groups spaced from each other by means of the intermediate support. In other embodiments, it is possible it is possible to direct an electro-spindle of one of the two spindle groups so that it moves to the space of the support, so that the respective tool connected to the spindle can machine a workpiece arranged adjacent to the support

Further advantageous characteristics and embodiments of the multi-spindle working head according to the invention are described hereafter with reference to the attached drawing, and in the appended claims, which form an integral part of the present description.

### Brief description of the drawings

The invention will be better understood by following the description and accompanying drawing, which shows non-limiting practical embodiments of the invention. More in particular, in the drawing:
figure 1 is a side view of an embodiment of a multi-spindle working head according to the invention in a first operating position;
figure 2 shows the working head of figure 1 in a second operating position;
figure 3 is a schematic view of a machining centre using the working head of figures 1 and 2;
figure 4 is a side view of a variant of embodiment of a spindle group according to line IV-IV of figure 1;
figures 5 and 6 show side views of a working head in a second embodiment in two operating positions;
figure 7 is a side view of a third embodiment of a working head according to the invention;
figure 8 is a side view of a fourth embodiment of a working head according to the invention;
figure 9 is a view according to IX-IX in figure 8;
figures 10 and 11 show a schematic view, in two different operating positions, of a further embodiment of the working head;
figure 12 is a view from the operator viewpoint of a machining centre with two working heads;
figure 13 shows a view according to XIII-XIII in figure 12.

### Detailed description of embodiments

The detailed description below of example embodiments is made with reference to the attached drawings. The same reference numbers in different drawings identify the equal or similar elements. Furthermore, the drawings are not necessarily to scale. The detailed description below does not limit the invention. The protective scope of the present invention is defined by the attached claims.

In the description, the reference to "an embodiment" or "the embodiment" or "some embodiments" means that a particular feature, structure or element described with reference to an embodiment is comprised in at least one embodiment of the described object. The sentences "in an embodiment" or "in the embodiment" or "in some embodiments" in the description do not therefore necessarily refer to the same embodiment or embodiments. The particular features, structures or elements can be furthermore combined in any adequate way in one or more embodiments.

In some embodiments described herein, the working head 1 is connected to a shaft, or other support member, schematically indicated with number 3. The working head 1 can comprise a support, or main body, 5, to which more tool spindles are coupled as described below, the spindles being subdivided into a first spindle group and a second spindle group. As it will be clearly apparent from the following description of some embodiments, one of the two spindle groups may comprise more spindles and the other spindle group may comprise only one spindle.

In some embodiments, the working head 1 is provided with a numerically controlled rotation around a first rotary axis C. To this end, the support 5 can be fastened to the shaft 3, which can be a rotary shaft rotating around the rotary axis C coinciding with the axis of the shaft 3. Advantageously, the rotary axis C can be a numerically controlled axis and the rotation around the rotary axis C can be controlled, for example, by means of a program run on a control unit of the machine tool or machining centre (not shown).

The support 5 may have a first end, or proximal end, 5A for connecting to the rotary shaft 3, and a second end, or distal end, 5B, opposite with respect to the first end 5A for connecting to the rotary shaft 3. The support has two sides 5A, 5Y between the two ends 5A, 5B.

A spindle group, indicated as a whole with number 7, can be fastened to the support 5. The spindle group 7 can be installed on one of the two sides of the support 5, in the example on the side 5Y. A second spindle group, indicated as a whole with number 14 in the embodiments described below with reference to the accompanying drawings, is supported on the opposite side or flank 5X.

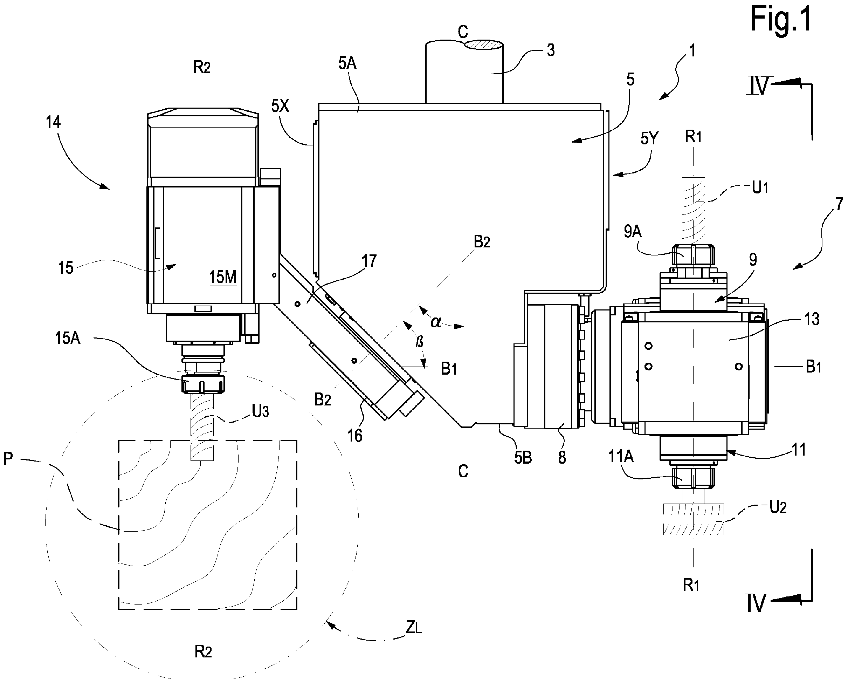

The spindle group 7 and the spindle group 4 may comprise a variable number of spindles, according to the configuration of the working head 1. A first configuration of the spindle groups will be described with reference to figures 1 to 4. In these figures, the spindle group 7 comprises two spindles 9, 11. The two spindles 9, 11 have respective couplings 9A, 11A for tools schematically shown at U1, U2. The two spindles 9, 11 may be coaxial with each other, as schematically shown in the figures. In this case, they have a common rotation axis R1. In other embodiments, the spindles may be arranged with their rotation axes inclined with respect to each other and driven into rotation by a common electric motor. The number of spindles of the spindle group 7 may be different than two. For example, the spindle group 7 can comprise only one spindle. In other embodiments, the spindle group 7 can have more than two spindles, for instance three or four spindles. In some embodiments, the spindle group 7 has four spindles arranged crosswise.

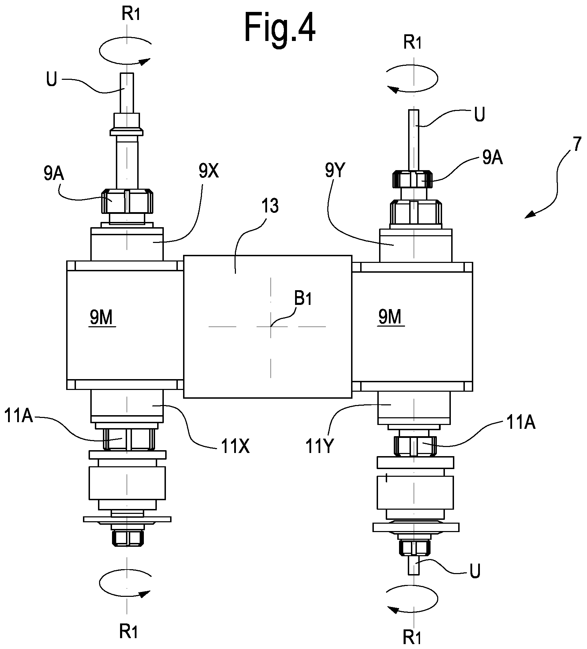

Figure 4 shows a side view, according to IV-IV of figure 1, of a modified embodiment, wherein the spindle group 7 comprises four spindles arranged in pairs. A first pair comprises spindles 9X, 11X and a second pair comprises spindles 9Y, 11Y. The spindles of each pair may be coaxial with each other and arranged so that their respective couplings 9A, 11A for the tools U are opposite each other.

In advantageous embodiments, pairs of coaxial spindles may be equipped with a common electric motor, indicated with M (figure 4). Practically, it is possible to have double electro-spindles, each of which is provided with an actuation electric motor and with two coaxial opposite spindles, with two couplings 9A, 11A for the tools.

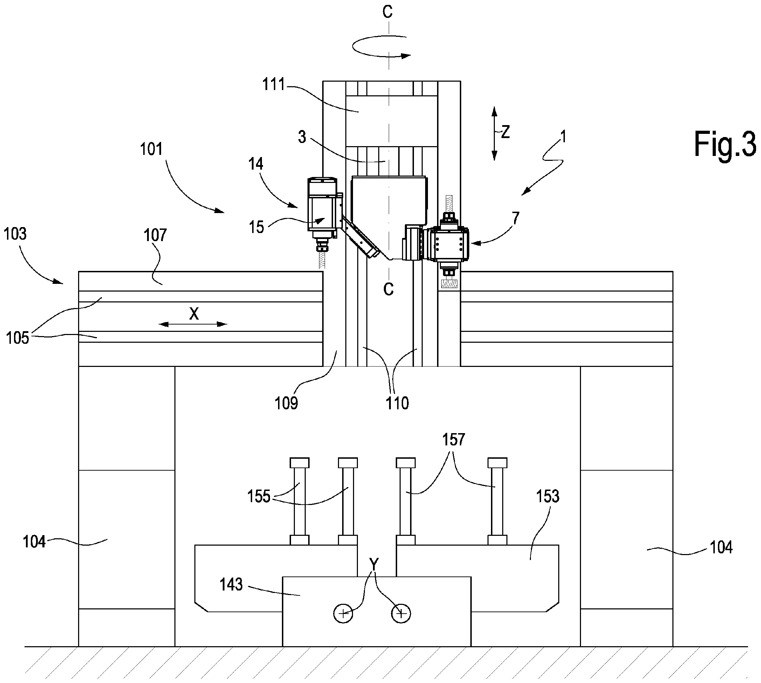

In advantageous embodiments, the spindle group 7 rotates around a second rotary axis B1. To this end, the spindles 9, 11; 9X, 11X, 9Y, 11Y of the spindle group 7 may be mounted on a core or other bearing member 13. The rotation around the second rotary axis B1 can be numerically controlled by means of a central control unit, with which is provided the machine tool or machining centre (schematically shown in figure 3), onto which the working head 1 is mounted. The rotation around the rotary axis B1 allows to bring into operative position one or the other of the tools U1, U2, U selectively, mounted on the spindles 9, 11; 9X, 11X, 9Y, 11Yof the spindle group 7. In figure 1, the spindle group 7 is arranged so that the tool U2 is in operative position. In the embodiment of figures 1 to 4, the first spindle group 7 is pivoted to the support or body 5 at a first pivoting joint 8, so as to rotate around the rotary axis B1.

When parallel spindles are provided with tool-holders directed in the same direction, like in spindles 9X, 9Y or 9Y, 11Y, the centre-to-centre distance between the spindles is such that the tool mounted on a spindle does not hinder the use of the tool mounted on the parallel spindle.

In some embodiments, the second rotary axis B1 is substantially orthogonal to the first rotary axis C. in some embodiments, one, some or all the rotation axes R1 of the spindles 9, 11; 9X, 11X, 9Y, 11Y of the spindle group 7 can be directed nearly parallel to the rotary axis C, as for the rotation axis R1 in the embodiments illustrated in the drawing. The rotary axes C and B1 can be coplanar. In other embodiments, the rotary axes C and B1 can be staggered from each another.

In the embodiment of figures 1 to 4, the working head 5 is provided with a second spindle group 14 comprising only one spindle 15, referred to herein as electro-spindle 15. The electro-spindle 15 is on the side 5X, opposite with respect to the side 5Y on which the spindle group 7 is supported.

The electro-spindle 15 may comprise a motor 15M and a connection 15A for a tool, schematically indicated with U3. The rotation axis of the tool U3 is indicated with R2.

The electro-spindle 15 may rotate around a third rotary axis B2. The rotation of the second spindle group 14 around the third rotary axis B2 is achieved by connecting the second spindle group 14 to the central body or support 5, in correspondence of a pivoting joint 16 on the side 5X of the body or support 5.

In some embodiments, the rotary axis B2 may be coplanar with the rotary axis B1 and/or the rotary axis C. The third rotary axis B2 may be a numerically controlled axis, such as the rotary axes C and B1, whose movement can be controlled by means of the same programmable control unit of the machine tool.

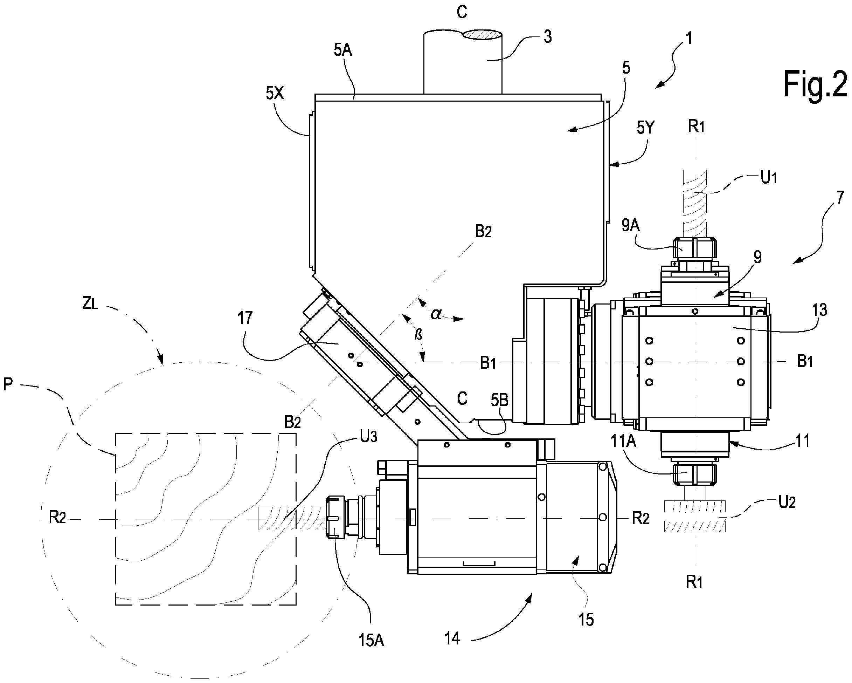

Rotating around the rotary axis B2, the electro-spindle 15 can be arranged with its rotation axis R2 alternatively in a position parallel (figure 1) or orthogonal (figure 2) to the first rotary axis C. The second rotary axis B2 can be arranged orthogonal (in the first operative position, figure 1) or parallel (in the second operative position, figure 2) with respect to the first rotary axis B1.

Advantageously, for the purposes detailed below, the third rotary axis B2 may be inclined with respect to both the first rotary axis C and the second rotary axis B1. For example, the third rotary axis B2 can be inclined by an angle comprised between 30° and 50°, preferably between 40° and 50°, and more preferably between 45° and 50, for instance 45° (angles α and β, figure 1) with respect to the rotary axis B2. In this case, the pivoting joint 16 between body or support 5 and electro-spindle 15 may be arranged on a portion of the side or flank 5X inclined with respect to the rotary axis C.

The electro-spindle 15 may be carried by a support member or arm 17, pivoted to the support 5 at the pivoting joint 16 around the third rotary axis B2. As it is clearly apparent by comparing figures 1 and 2, by rotating around the third rotary axis B2 the arm 17 can bring the electro-spindle 15 into a first operative position (figure 1) and a second operative position (figure 2), alternatively. In the two distinct operative positions the rotation axis R2 of the electro-spindle 15 may take two mutually orthogonal positions. Moreover, the two operative positions can be such that, in both these positions, the coupling 15A for the tool U3, and thus the tool U3 itself, are directed towards the same working area, schematically indicated with ZL in the figures. In this way, the tool U3 mounted on the electro-spindle 15 can machine different faces of a same workpiece P arranged in the area Z, for example an element elongated into a direction orthogonal to the plane of figures 1 and 2. Figures 1 and 2 schematically show a cross-section of the workpiece P.

As shown in figure 1, when the electro-spindle is in the first operative position, it is directed downwards (in the figure), i.e. with the tool U3 facing the side opposite the proximal end 5A of the support 5. In this position, the coupling 15A for the tool U3 is spaced with respect to the position taken by the couplings 9A, 11A for the tools U1, U2 of the spindle group 7. In this way, the workpiece P can be easily machined without colliding against the tools U1, U2 carried by the spindle group 7.

In the second operative position (figure 2), the electro-spindle 15 is beyond the distal end 5B of the support 5, i.e. therebelow, i.e. next to the coupling 11A of the spindle 11, but with the tool U3 facing the side opposite the spindle group 7. Also in this position, the tool U3 can machine the workpiece P without colliding against the spindles 9, 11. The motor 15M of the electro-spindle 15 moves to the space of the support or body 5, between the coupling 15A for the tool U3 of the electro-spindle 15 and the spindle group 7.

Practically, the body or support 5 forms a spacing element between the first spindle group 7 and the second spindle group 14, and this allows machining a workpiece P with a plurality of tools carried by the two spindle groups 7, 14, limiting both the bulk of the working head 1 and the strokes the working head 1 shall perform. This is advantageous in terms of cost reduction, increase of operating speed and/or machining accuracy.

Figure 3 shows a front view of an exemplary embodiment of a machining centre, indicated as a whole with number 101, onto which the working head 1 described above can be mounted. In this example, the machining centre 101 is a gantry machining centre, with a gantry 103 formed by two uprights 104 and a crossbeam 107, onto which guides 105 are provided for a first slide 109 sliding according to a numerically controlled translation axis X. The slide 109 can carry two guides 110 for a second slide 111, movable according to a numerically controlled translation axis Z. The second slide 111 carries the rotary shaft 3, which, in turn, carries the working head 1.

Below the crossbeam, and at about 90° with respect to it, a base 143 extends, with one or more tables 153 (two in the illustrated examples) that can move according to a third numerically controlled translation axis Y. Locking means, schematically indicated with 155, 157, are provided on the table(s) 153 to lock the workpieces. The working head 1 can move along the numerically controlled translation axes X and Z, and the workpieces move along the numerically controlled axis Y to perform the necessary machining operations. Moreover, the tools carried by the spindles described above of the multi-spindle working head 1 can move around the numerically controlled rotary axes C, B1, and B2.

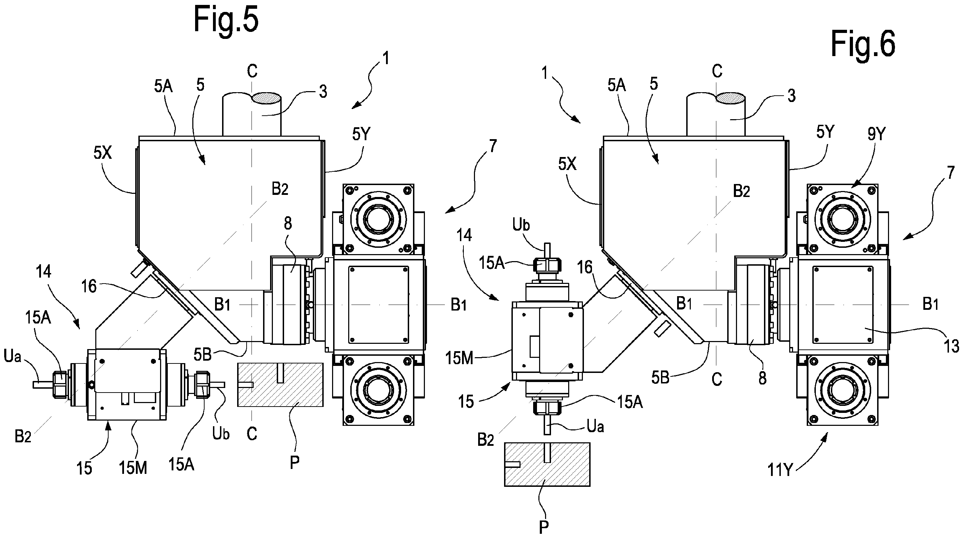

Figures 5 and 6 show a further embodiment of a working head according to the present invention. The same numbers indicate identical or equivalent parts to those described and illustrated in figures 1 to 4.

In the embodiment of figures 5 and 6, the second spindle group 14 comprises two spindles, i.e. a double electro-spindle 15 with a motor 15M and two couplings 15A for respective tools Ua and Ub, coaxial with and opposite to each other. In the arrangement of figure 5, the tool Ub can horizontally machine a workpiece P that can be arranged above the working head 1 in the space freed from the body or support 5 spacing the first spindle group 7 from the second spindle group 14. The tool Ua can horizontally machine a workpiece (not shown) arranged at the side of the working head 1.

In the arrangement of figure 6, the tool Ua can vertically machine, from the top, a workpiece P arranged below the working head 1 and laterally displaced with respect to the working head. The tool Ub can make a vertical hole from the bottom upwards in a workpiece (not shown).

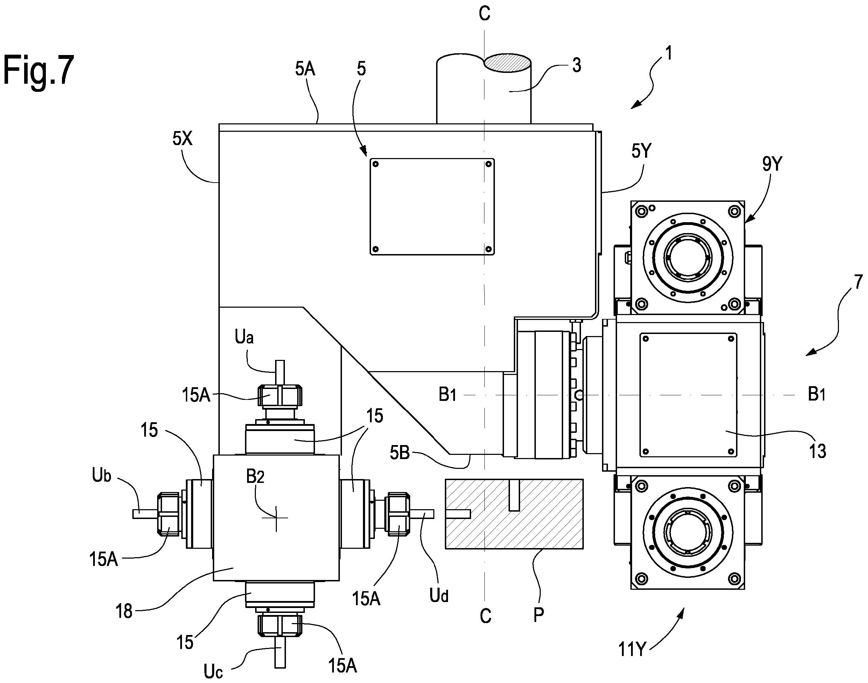

Figure 7 shows a further embodiment of a working head 1 according to the present invention. Equal numbers indicate equal or equivalent parts to those already described with reference to the previous embodiments. In the embodiment of figure 7, the second spindle group 14 comprises a plurality of spindles rotating around the third rotary axis B2, that is, in this case, nearly orthogonal to the rotary axes C and B1. The second spindle group 14 may comprise four spindles 15, arranged in a crosswise configuration, each of which is provided with a coupling 15A for a respective tool Ua, Ub, Uc, Ud. The spindles 15 of the second spindle group 14 may be carried by a core or bearing member 18, rotating around the rotary axis B2 to bring one or the other of the tools Ua, Ub, Uc, Ud into operative position.

In the arrangement of figure 7, the tool Ud faces the first spindle group 7 and is arranged below the body or support 5 of the working head 1. In this position, the tool Ud can machine a workpiece P arranged in the space freed from the support 5 between the first spindle group 7 and the second spindle group 14. The opposite tool Ub can machine a workpiece arranged on the left (in the figure) with respect to the core 18, while the tool Uc can machine a workpiece arranged in a position lower than the working head 1.

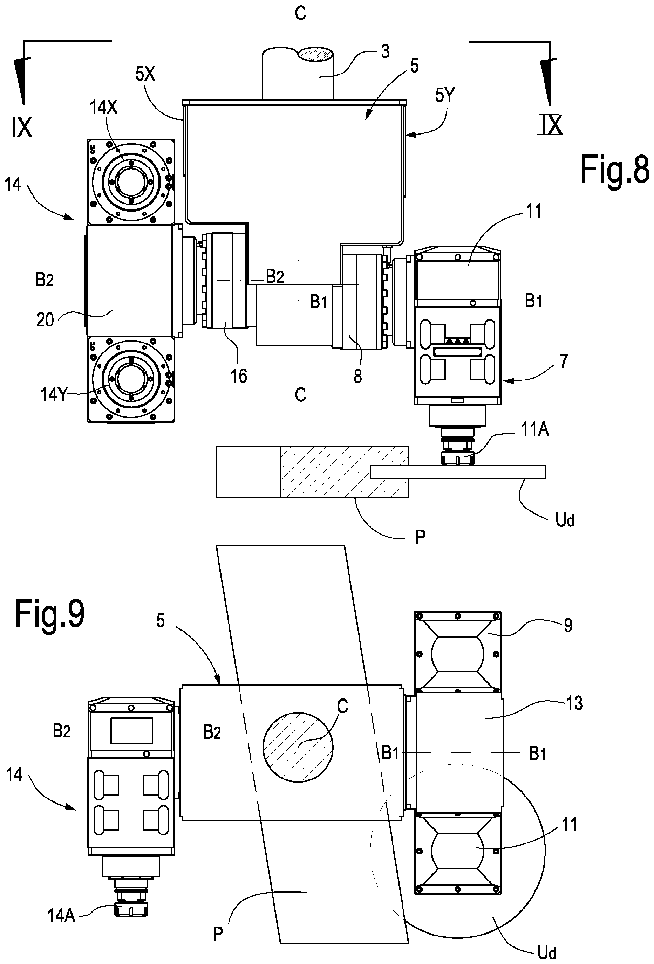

Figures 8 and 9 show a further embodiment of a working head 1 according to the present invention. Equal numbers indicate equal or equivalent parts to those already described with reference to the previous embodiments. In the embodiment of figures 8 and 9, each of the two spindle groups 7 and 14 has more than one spindle. Just by way of example, each spindle group comprises two spindles with parallel axes. The two spindle groups 7, 14 are mounted on a support 5 rotating around a numerically controlled first rotary axis C.

Just by way of example, the spindle group 7 may comprise two spindles 9, 11 mounted on a bearing member or core 13, pivoted at 8 to the side 5Y of the support 5 of the working head 1. The core 3 can rotate around a numerically controlled second rotary axis B1. The numerically controlled second rotary axis B1 can be oriented at 90° with respect to the numerically controlled first rotary axis C and coplanar therewith, as shown in figure 9. In other embodiments, the axes B1 and C can be non- coplanar.

Just by way of example, the spindle group 14 may comprise two spindles 14X, 14Y with parallel axes mounted on a core or other bearing member 20. The core 20 can be articulated at 16 to the left side 5X of the support 5 of the working head 1. The spindle group 14 can rotate around a numerically controlled third rotary axis B1. The third rotary axis B2 can be parallel to the rotary axis B, but not coincident therewith, and oriented at 90° with respect to the rotary axis C. In other embodiments, the rotary axes B1 and B2 can be coincident and coplanar with or non-coplanar with the rotary axis C.

The distance between the first spindle group 7 and the second spindle group 14 can be such as to arrange a workpiece P therebetween. In figures 8 and 9, a disc-shaped tool Ud is mounted, by way of example, on the spindle 11. The workpiece P can be arranged inclined so as not to collide against the tools mounted on the spindles 14X, 14Y and 9 while it is machined by the disc-shaped tool Ud mounted on the spindle 11.

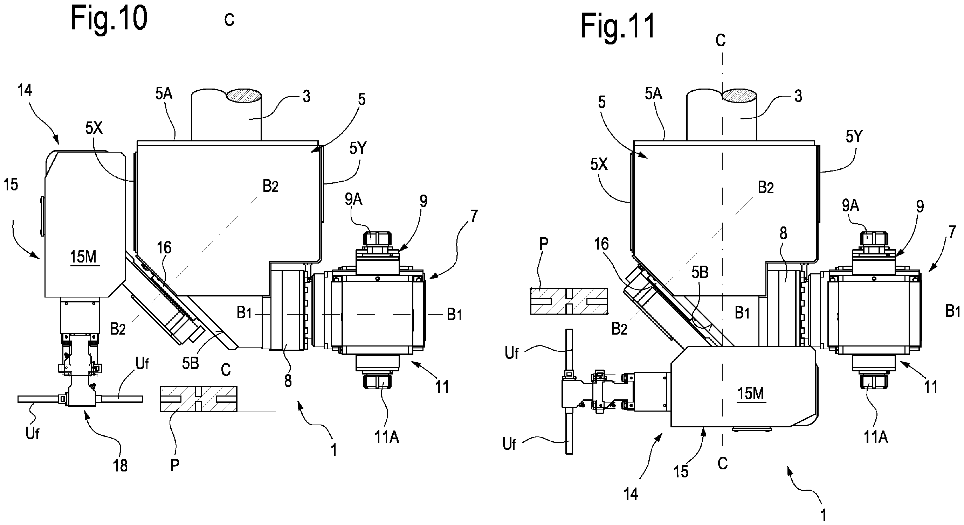

Figures 10 and 11 show an embodiment of a working head 1 similar to the working head of figures 1 and 2, in two different operative positions. The same numbers are used to indicate identical or equivalent parts to those in figures 1 and 2. In the embodiment of figures 10 and 11, the spindle group 14 comprises an aggregate formed by one or more pairs of drill spindles 18, that can carry tools Uf, for instance drills, arranged in pairs, each of which comprises two coaxial and opposite tools. Aggregates of this type are known. In figure 10, the spindle group 14 is arranged in such a position that the rotation axes of the drills Uf are arranged horizontally. As the drills Uf are on both the sides of the aggregate forming the tool group 14, it is possible to machine a workpiece P arranged below the support 5 of the working head 1, as shown in figure 10, or a workpiece arranged on the opposite side with respect to the axis of the motor 15M.

By rotating the tool group 14 around the third rotary axis B2, the drills Uf are arranged as shown in figure 11, and can machine, both from the top and the bottom, a workpiece P arranged at the side with respect to the support 5 of the working head 1.

In all embodiments described herein, the working head 1 has a particularly compact structure, as the two spindle groups 7, 14 are arranged on a common support 5 located in an intermediate position. The spindle groups can machine workpieces arranged below the support 5 and/or at the side of the support 5, so that the spindle group 7, 14 is arranged between the support 5 and the workpiece or below the support 5. Moreover, the spindle groups 7, 14 are carried on two sides 5Y, 5X respectively of the support 5, which is arranged in intermediate position between the spindle groups (and more specifically between the pivoting joints 8 and 16 thereof to the support 5) without the need for bearing structures outside with respect to the spindle groups, i.e. beyond the machining area of the respective tools. Vice versa, in the working heads of the prior art each spindle group is supported by means of an outwardly arranged arm , i.e. at opposite side with respect to the main rotary axis, with the spindle group arranged between the first rotary axis and the support arm. The resulting structure, with two parallel arms and the spindles arranged between the two support arms, is bulky and, with it, it is necessary to control a reciprocal movement towards and away of the two support arms, which is not necessary in the configuration described herein.

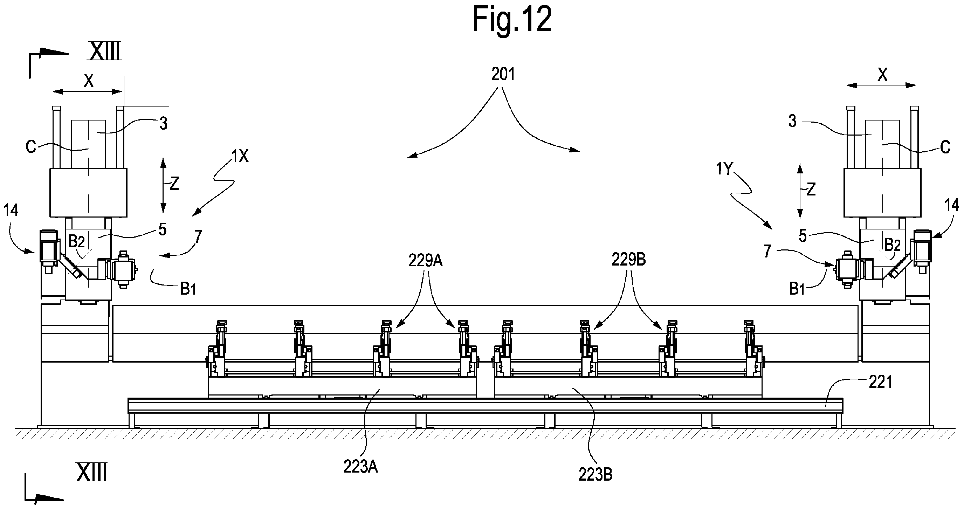

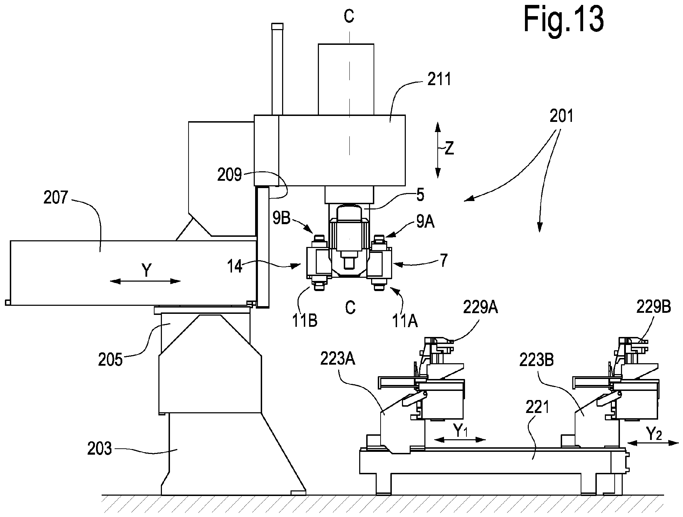

Figures 12 and 13 show views of a machining centre 201 using two distinct working heads 1X, 1Y according to the invention. The working heads here indicated as 1X, 1Y can be of the type illustrated in figures 1 and 2 (as shown by way of example in figures 12 and 13), or can be configured according to the other exemplary embodiments described herein.

The machining centre 201 comprises a base 203, onto which two uprights 205 are provided, each of which carries one of the two working heads 1 and is movable, independently of the other one, according to a numerically controlled translation axis, schematically indicated with X for both the uprights. A slide 207 (figure 13) is provided on each upright 205, moving according to a numerically controlled translation axis schematically indicated with Y. Each slide 207 carries guides 209 for a further slide 211. Each slide 211 can move according to a numerically controlled third translation axis, schematically indicated with Z, directed vertically and orthogonally with respect to the numerically controlled axes X and Y. Each slide 207 carries one of the two working heads 1.

With this arrangement, the spindle groups 7, 14 of each working head 1 can move according to the translation axes X, Y, Z and according to the rotary axis C of the respective working head 1X, 1Y. Moreover, each spindle group 7, 14 can rotate according to the respective rotary axis B1 and B2. The movements of the spindle groups 7, 14 of the two working heads 1X and 1Y.

The machining centre 201 furthermore comprises a base 221, onto which workpiece-holding tables are mounted. In other embodiments, the bases 203 and 221 can be replaced with a single base.

Two tables or slides 223A, 223B can be provided on the base 221, moving independently of each other along a numerically controlled translation axis Y1 and Y2 (figure 13). Each table 223A, 223B comprises locking means 229A, 229B to lock workpieces. The slides or tables 223A, 223B can move between a load area (where there is the table 223B in figure 13) and a machining area (table 223A in figure 13) and vice versa.

It is understood that the drawing merely shows a possible embodiment of the invention, which may vary in forms and layouts without however departing from the scope of the concept on which the invention is based and which is defined by the appended claims. The possible presence of reference numerals in the attached claims has the sole purpose of facilitating reading thereof in the light of the preceding description and the (attached) accompanying drawings and does not in any way limit the protective scope thereof.

## Claims

1. A multi-spindle working head comprising:
a support (5) rotating around a first numerically controlled rotary axis (C);
on a first side (5Y) of the support (5), a first spindle group (7) rotating around a second numerically controlled rotary axis (B1) and comprising at least two spindles (9; 11);
on a second side (5X) of the support (5), a second spindle group (14) rotating around a third numerically controlled rotary axis (B2);
wherein the first rotary axis (C) is in an intermediate position between the first side (5Y) and the second side (5X) of the support (5); and wherein the first spindle group (7) and the second spindle group (14) are spaced from each other by means of the support (5) interposed therebetween, the support (5) forming a spacer between a first pivoting joint, joining the first spindle group (7) to the support (5), and a second pivoting joint, joining the second spindle group (14) to the support.

2. Multi-spindle working head according to claim 1, wherein said first spindle group (7) rotates around the second rotary axis (B1) to selectively move one or the other of said at least two spindles in an operative position.

3. Multi-spindle working head according to one or more of the previous claims, wherein the second spindle group (14) comprises a single spindle (15).

4. Multi-spindle working head according to one or more of the previous claims, wherein the second spindle group (7) comprises at least one spindle with a respective rotation axis (R2), and wherein the third rotary axis (B2) is arranged and configured so that by means of the rotation thereof the rotation axis (R2) of the spindle (15) of the second spindle group (14) takes alternatively a first position parallel to the second rotary axis (B1) of the first spindle group (7) and a second position orthogonal to the second rotary axis (B1) of the first spindle group (7).

5. Multi-spindle working head according to one or more of claims 1 to 3, wherein the second spindle group (14) comprises at least one spindle (15) with a respective rotation axis (R2), and wherein in a first operating position said at least one spindle is arranged with the rotation axis (R2) thereof parallel to the first rotary axis (C) and/or orthogonal to the second rotary axis (B1), and in a second operating position is arranged with its rotation axis (R2) orthogonal to the first rotary axis (C) and/or parallel to the second rotary axis (B1).

6. Multi-spindle working head according to claim 4 or 5, wherein the second spindle group is configured so that in the second position said at least one spindle (15) of the second spindle group (14) faces towards the first spindle group (7) to machine a workpiece (P) arranged between the first spindle group (7) and the second spindle group (14), or said at least one spindle (15) of the second spindle group (14) faces towards the side opposite the first spindle group (7) and the motor (15M) of said at least one spindle (15) is arranged between said at least one spindle (15) of the second spindle group (14) and the first spindle group (7).

7. Multi-spindle working head according to one or more of the previous claims, wherein the third rotary axis (B2) is inclined with respect to the first rotary axis (C) around which the support (5) rotates, the inclination of the third rotary axis (B2) with respect to the first rotary axis (C) being preferably about 45°.

8. Multi-spindle working head according to one or more of the previous claims, wherein the third rotary axis (B2) is coplanar with the first rotary axis (C).

9. Multi-spindle working head according to one or more of the previous claims, wherein the second rotary axis (B1) is coplanar with the first rotary axis (C).

10. Multi-spindle working head according to one or more of the previous claims, wherein the first spindle group (7) comprises at least two coaxial or parallel spindles, whose rotation axes are substantially at 90° with respect to the second rotary axis (B1) and/or substantially parallel to the first rotary axis (C).

11. Multi-spindle working head according to one or more of the previous claims, wherein the second spindle group (14) comprises a single electro-spindle (15) with a single coupling (15A) for respective tools, or a single electro-spindle with two coaxial couplings (15A) for two tools.

12. Multi-spindle working head according to one or more of the previous claims, wherein the second rotary axis (B1) is orthogonal to the first rotary axis (C).

13. Multi-spindle working head according to one or more of the previous claims, wherein the support has a first end (5A) for connecting to a rotary shaft (3), a second end (5B) opposite to the rotary shaft (3), a first side (5Y) and a second side (5X) opposite to each other and extending from the first end to the second end; wherein the first spindle group (7) is rotatingly supported around the second rotary axis (B1) on one of said first side (5Y) and second side (5X) and the second spindle group (14) is rotatingly supported around the third rotary axis (B2) on the other of said first side (5Y) and second side (5X).

14. Multi-spindle working head according to claim 13, wherein the second spindle group (14) comprises at least one spindle (15) directed so that in a first operative position it is arranged at the side of the respective side (5X) whereto it is pivoted and spaced therefrom, and wherein in the other of said at least two operative positions is arranged beyond the second end (5B) of the support (5).

15. Multi-spindle working head according to claim 14, wherein when said at least one spindle (15) is arranged at the side of the respective side (5X), the rotation axis (R2) of said at least one spindle is substantially parallel to the first rotary axis (C), and when said at least one spindle (15) is arranged beyond the second end (5B) of the support (5) the rotation axis of said at least one spindle (15) is substantially orthogonal to the first rotary axis (C).

16. A machine tool or machining centre comprising at least one multi - spindle working head (1) according to one or more of the previous claims.

## Patentansprüche

1. Mehrspindeliger Arbeitskopf mit:
einem Träger (5), der sich um eine erste numerisch gesteuerte Drehachse (C) dreht,
einer ersten Spindelgruppe (7) auf einer ersten Seite (5Y) des Trägers (5), die sich um eine zweite numerisch gesteuerte Drehachse (B1) dreht und mindestens zwei Spindeln (9; 11) aufweist, einer zweiten Spindelgruppe (14) an einer zweiten Seite (5X) des Trägers (5), die sich um eine dritte numerisch gesteuerte Drehachse (B2) dreht,
wobei die erste Drehachse (C) in einer Zwischenposition zwischen der ersten Seite (5Y) und der zweiten Seite (5X) des Trägers (5) ist und wobei die erste Spindelgruppe (7) und die zweite Spindelgruppe (14) voneinander mittels des Trägers (5), der zwischengefügt ist, beabstandet sind, wobei der Träger (5) einen Abstandshalter zwischen einer ersten Schwenkverbindung, die die erste Spindelgruppe (7) mit dem Träger (5) verbindet, und einer zweiten Schwenkverbindung, die die zweite Spindelgruppe (15) mit dem Träger verbindet, bildet.

2. Mehrspindeliger Arbeitskopf nach Anspruch 1, wobei die erste Spindelgruppe (7) um die zweite Drehachse (B1) dreht, um selektiv die eine oder die andere der mindestens zwei Spindeln in eine Betriebsposition zu bewegen.

3. Mehrspindeliger Arbeitskopf nach einem oder mehreren der vorstehenden Ansprüche, wobei die zweite Spindelgruppe (14) eine einzelne Spindel (15) aufweist.

4. Mehrspindeliger Arbeitskopf nach einem oder mehreren der vorstehenden Ansprüche, wobei die zweite Spindelgruppe (7) mindestens eine Spindel mit einer entsprechenden Drehachse (R2) aufweist und wobei die dritte Drehachse (B2) angeordnet und so ausgebildet ist, dass mittels ihrer Drehung die Drehachse (R2) der Spindel (15) der zweiten Spindelgruppe (14) alternativ eine erste Position parallel zu der zweiten Drehachse (B1) der ersten Spindelgruppe (7) und eine zweite Position orthogonal zu der zweiten Drehachse (B1) der ersten Spindelgruppe (7) einnimmt.

5. Mehrspindeliger Arbeitskopf nach einem oder mehreren der Ansprüche 1 bis 3, wobei die zweite Spindelgruppe (14) mindestens eine Spindel (15) mit einer entsprechenden Drehachse (R2) aufweist und wobei in einer ersten Betriebsposition die mindestens eine Spindel mit ihrer Drehachse (R2) parallel zu der ersten Drehachse (C) und/oder orthogonal zu der zweiten Drehachse (B1) angeordnet ist und in einer zweiten Betriebsposition mit der Drehachse (R2) orthogonal zu der ersten Drehachse (C) und/oder parallel zu der zweiten Drehachse (B1) angeordnet ist.

6. Mehrspindeliger Arbeitskopf nach Anspruch 4 oder 5, wobei die zweite Spindelgruppe so ausgebildet ist, dass in der zweiten Position die mindestens eine Spindel (15) der zweiten Spindelgruppe (14) zu der ersten Spindelgruppe (7) gerichtet ist, um ein Werkstück (P), das zwischen der ersten Spindelgruppe (7) und der zweiten Spindelgruppe (14) angeordnet ist, zu bearbeiten, oder dass die mindestens eine Spindel (15) der zweiten Spindelgruppe (14) zu der Seite entgegen der ersten Spindelgruppe (7) gerichtet ist und der Motor (15M) der mindestens einen Spindel (15) zwischen der mindestens einen Spindel (15) der zweiten Spindelgruppe (14) und der ersten Spindelgruppe (7) angeordnet ist.

7. Mehrspindeliger Arbeitskopf nach einem oder mehreren der vorstehenden Ansprüche, wobei die dritte Drehachse (B2) mit Bezug auf die erste Drehachse (C) geneigt ist, um die der Träger (5) dreht, wobei die Neigung der dritten Drehachse (B2) mit Bezug auf die erste Drehachse (C) vorzugsweise etwa 45° beträgt.

8. Mehrspindeliger Arbeitskopf nach einem oder mehreren der vorstehenden Ansprüche, wobei die dritte Drehachse (B2) koplanar mit der ersten Drehachse (C) ist.

9. Mehrspindeliger Arbeitskopf nach einem oder mehreren der vorstehenden Ansprüche, wobei die zweite Drehachse (B1) koplanar mit der ersten Drehachse (C) ist.

10. Mehrspindeliger Arbeitskopf nach einem oder mehreren der vorstehenden Ansprüche, wobei die erste Spindelgruppe (7) mindestens zwei koaxiale oder parallele Spindeln aufweist, deren Drehachsen im wesentlichen bei 90° mit Bezug auf die Drehachse (B1) und/oder im wesentlichen parallel zu der ersten Drehachse (C) sind.

11. Mehrspindeliger Arbeitskopf nach einem oder mehreren der vorstehenden Ansprüche, wobei die zweite Spindelgruppe (14) eine einzelne Elektrospindel (15) mit einer einzelnen Kupplung (15A) für jeweilige Werkzeuge oder eine einzelne Elektrospindel mit zwei koaxialen Kupplungen (15A) für zwei Werkzeuge aufweist.

12. Mehrspindeliger Arbeitskopf nach einem oder mehreren der vorstehenden Ansprüche, wobei die zweite Drehachse (B1) orthogonal zu der ersten Drehachse (C) ist.

13. Mehrspindeliger Arbeitskopf nach einem oder mehreren der vorstehenden Ansprüche, wobei der Träger ein erstes Ende (5A) zur Verbindung mit einer Drehwelle (3), ein zweites Ende (5B) gegenüber der Drehwelle (3), eine erste Seite (5Y) und eine zweite Seite (5X) einander gegenüberliegend und sich von dem ersten Ende zu dem zweiten Ende erstreckend aufweist, wobei die erste Spindelgruppe (7) drehbar um die zweite Drehachse (B1) auf der ersten Seite (5Y) oder der zweiten Seite (5X) getragen ist und die zweite Spindelgruppe (14) drehbar um die dritte Drehachse (B2) auf der anderen der ersten Seite (5Y) und der zweiten Seite (5X) getragen ist.

14. Mehrspindeliger Arbeitskopf nach Anspruch 13, wobei die zweite Spindelgruppe (14) mindestens eine Spindel (15) aufweist, die so gerichtet ist, dass sie in einer ersten Betriebsposition an der Seite der jeweiligen Seite (5X) angeordnet ist, zu der sie geschwenkt wird und davon beabstandet ist, und wobei die andere der mindestens zwei Betriebspositionen unterhalb des zweiten Endes (5 B) des Trägers (5) angeordnet ist.

15. Mehrspindeliger Arbeitskopf nach Anspruch 14, wobei, wenn die mindestens eine Spindel (15) an der Seite der jeweiligen Seite (5X) angeordnet ist, die Drehachse (R2) der mindestens einen Spindel im wesentlichen parallel zu der ersten Drehachse (C) ist, und wenn die mindestens eine Spindel (15) unterhalb des zweiten Endes (5 B) des Trägers (5) angeordnet ist, die Drehachse der mindestens einen Spindel (15) im wesentlichen orthogonal zu der ersten Drehachse (C) ist.

16. Werkzeugmaschine oder Bearbeitungszentrum mit mindestens einem mehrspindeligen Arbeitskopf (1) nach einem oder mehreren der vorstehenden Ansprüche.

## Revendications

1. Une tête d'usinage multibroche comprenant :
un support (5) tournant autour d'un premier axe tournant commandé numériquement (C) ; d'un premier côté (5Y) du support (5), un premier groupe de broches (7) tournant autour d'un deuxième axe tournant commandé numériquement (B1) et comprenant au moins deux broches (9; 11);
d'un second côté (5X) du support (5), un second groupe de broches (14) tournant autour d'un troisième axe tournant commandé numériquement (B2) ;
dans laquelle le premier axe tournant (C) est dans une position intermédiaire entre le premier côté (5Y) et le second côté (5X) du support (5) ; et dans laquelle le premier groupe de broches (7) et le second groupe de broches (14) sont espacés l'un de l'autre au moyen du support (5) placé entre eux, le support (5) formant une entretoise entre une première articulation, reliant le premier groupe de broches (7) au support (5), et une seconde articulation, reliant le deuxième groupe de broches (14) au support.

2. Tête d'usinage multibroche selon la revendication 1, dans laquelle ledit premier groupe de broches (7) tourne autour du deuxième axe tournant (B1) pour mettre sélectivement l'une ou l'autre desdites deux broches au moins dans une position opérationnelle.

3. Tête d'usinage multibroche selon une ou plusieurs des revendications précédentes, dans laquelle le second groupe de broches (14) comprend une unique broche (15).

4. Tête d'usinage multibroche selon une ou plusieurs des revendications précédentes, dans laquelle le second groupe de broches (7) comprend au moins une broche avec un axe de rotation respectif (R2), et dans laquelle le troisième axe tournant (B2) est agencé et configuré de telle sorte que grâce à sa rotation, l'axe de rotation (R2) de la broche (15) du second groupe de broches (14) occupe alternativement une première position parallèle au deuxième axe tournant (B1) du premier groupe de broches (7) et une seconde position orthogonale au second axe tournant (B1) du premier groupe de broches (7).

5. Tête d'usinage multibroche selon un ou plusieurs des revendications 1 à 3, dans laquelle le second groupe de broches (14) comprend au moins une broche (15) avec un axe de rotation respectif (R2) et dans laquelle dans une première position opérationnelle, ladite ou lesdites broche(s) est/sont agencée(s) avec son/leur axe de rotation (R2) parallèle au premier axe tournant (C) et/ou orthogonal au second axe tournant (B1), et dans une seconde position opérationnelle avec son axe de rotation (R2) orthogonal au premier axe tournant (C) et/ou parallèle au deuxième axe tournant (B1).

6. Tête d'usinage multibroche selon la revendication 4 ou 5, dans laquelle le second groupe de broches est configuré de telle sorte que dans la seconde position, ladite ou lesdites broche(s) (15) du second groupe de broches (14) est/sont tournée(s) vers le premier groupe de broches (7) pour usiner une pièce à usiner (P) agencée entre le premier groupe de broches (7) et le second groupe de broches (14), ou ladite ou lesdites broche(s) (15) du second groupe de broches (14) est/sont tournée(s) vers le côté opposé au premier groupe de broches (7) et le moteur (15M) de ladite ou desdites broche(s) (15) est agencé entre ladite ou lesdites broche(s) (15) du second groupe de broches (14) et le premier groupe de broches (7).

7. Tête d'usinage multibroche selon une ou plusieurs des revendications précédentes, dans laquelle le troisième axe tournant (B2) est incliné par rapport au premier axe tournant (C) autour duquel le support (5) tourne, l'inclinaison du troisième axe tournant (B2) par rapport au premier axe tournant (C) étant de préférence d'environ 45 degrés.

8. Tête d'usinage multibroche selon une ou plusieurs des revendications précédentes, dans laquelle le troisième axe tournant (B2) est coplanaire avec le premier axe tournant (C).

9. Tête d'usinage multibroche selon une ou plusieurs des revendications précédentes, dans laquelle le second axe tournant (B1) est coplanaire avec le premier axe tournant (C).

10. Tête d'usinage multibroche selon une ou plusieurs des revendications précédentes, dans laquelle le premier groupe de broches (7) comprend au moins deux broches coaxiales ou parallèles, dont les axes de rotation sont sensiblement à 90 degrés par rapport au deuxième axe de rotation (B1) et/ou sensiblement parallèles au premier axe de rotation (C).

11. Tête d'usinage multibroche selon une ou plusieurs des revendications précédentes, dans laquelle le second groupe de broches (14) comprend une unique électro-broche (15) avec un couplage unique (15A) pour des outils respectifs, ou une unique électro-broche avec deux couplages coaxiaux (15A) pour deux outils.

12. Tête d'usinage multibroche selon une ou plusieurs des revendications précédentes, dans laquelle le deuxième axe tournant (B1) est orthogonal au premier axe tournant (C).

13. Tête d'usinage multibroche selon une ou plusieurs des revendications précédentes, dans laquelle le support a une première extrémité (5A) pour une connexion à un premier axe tournant (3), une seconde extrémité (5B) opposée à l'axe tournant (3), un premier côté (5Y) et un second côté (5X) opposés l'un à l'autre et s'étendant depuis la première extrémité jusqu'à la seconde extrémité ; dans laquelle le premier groupe de broches (7) est supporté en rotation autour du deuxième axe tournant (B1) d'un côté choisi parmi lesdits premier côté (5Y) et second côté (5X) et le second groupe de broches (14) est supporté en rotation autour du troisième axe tournant (B2) de l'autre desdits premier côté (5Y) et second côté (5X).

14. Tête d'usinage multibroche selon la revendication 13, dans laquelle le second groupe de broches (14) comprend au moins une broche (15) orientée de telle sorte que dans une première position opérationnelle, elle soit agencée du côté du côté respectif (5X) où elle est pivotée et dont elle est espacée, et dans laquelle dans l'autre desdites deux positions opérationnelles au moins, elle soit agencée au-delà de la seconde extrémité (5B) du support (5).

15. Tête d'usinage multibroche selon la revendication 14, dans laquelle lorsque ladite ou lesdites broche(s) (15) est/sont agencée(s) du côté du côté respectif (5X), l'axe de rotation (R2) de ladite ou desdites broche(s) est sensiblement parallèle au premier axe tournant (C) et lorsque ladite ou lesdites broche(s) (15) est/sont agencée(s) au-delà de la seconde extrémité (5B) du support (5), l'axe de rotation de ladite ou desdites broche(s) (15) est sensiblement orthogonal au premier axe tournant (C).

16. Une machine-outil ou un centre d'usinage comprenant au moins une tête d'usinage multibroche (1) selon une ou plusieurs des revendications précédentes.
